(19) Europäisches Patentamt / European Patent Office / Office européen des brevets

(11) **EP 2 042 531 B1**

(12) **EUROPEAN PATENT SPECIFICATION**

(45) Date of publication and mention
of the grant of the patent:
**01.09.2010 Bulletin 2010/35**

(51) Int Cl.:
**C08F 297/04** *(2006.01)*    **C08L 53/02** *(2006.01)*
**C08L 101/00** *(2006.01)*

(21) Application number: **07767938.9**

(22) Date of filing: **29.06.2007**

(86) International application number:
**PCT/JP2007/063153**

(87) International publication number:
**WO 2008/001907 (03.01.2008 Gazette 2008/01)**

(54) **BLOCK COPOLYMER, COMPOSITION FOR RESIN MODIFICATION, AND MODIFIED RESIN COMPOSITION**

BLOCKCOPOLYMER, ZUSAMMENSETZUNG ZUR HARZMODIFIZIERUNG UND MODIFIZIERTE HARZZUSAMMENSETZUNG

COPOLYMERE SEQUENCE, COMPOSITION POUR UNE MODIFICATION DE RESINE ET COMPOSITION DE RESINE MODIFIEE

(84) Designated Contracting States:
**DE FR GB IT**

(30) Priority: **30.06.2006 JP 2006181130**

(43) Date of publication of application:
**01.04.2009 Bulletin 2009/14**

(73) Proprietor: **Zeon Corporation**
**Tokyo 100-8246 (JP)**

(72) Inventors:
• **NAKAMURA, Masao**
**Tokyo 100-8246 (JP)**
• **ITO, Kazuya**
**Tokyo 100-8246 (JP)**
• **YAMAGISHI, Hidenori**
**Tokyo 100-8246 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**EP-A- 1 270 625**    **WO-A1-2006/120995**
**WO-A1-2007/013541**    **DE-A1- 4 420 952**
**JP-A- 05 331 247**    **JP-A- 10 036 465**
**JP-A- 10 204 136**    **JP-A- 10 265 537**
**US-A- 4 110 500**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 042 531 B1

**Description**

Technical Field

This invention relates to a block copolymer, a composition for modifying a resin, and a modified resin composition. More particularly, it relates to a block copolymer which can give, when it is used as a modifier for resin, a resin composition having improved impact resistance and enhanced processability and shapability and giving a shaped article with minimized fish eyes; a composition for modifying a resin, which comprises said block copolymer; and a resin-modified composition comprising the composition for modifying a resin.

Background Art

Styrene resins have good shapability and good mechanical properties, and are inexpensive, therefore, they are widely used. Especially a styrene resin modified with polybutadiene exhibits excellent impact resistance and is widely used in home electric appliances, office appliances, packagings and sundries. However, a problem arises styrene in the resin modified with polybutadiene, in that the fluidity, i.e., processability and shapability, drastically decreases.

A resin to be modified, such as a styrene resin, is referred to as "base resin", and an ingredient used for modifying the properties of a base resin, such as polybutadiene, is referred to as "modifier".

Another proposal has been made to provide a styrene resin shaped article having improved impact resistance, which includes a method of modifying a styrene resin by incorporating therein a styrene-butadiene block copolymer prepared by copolymerization using an alkali metal catalyst such as n-butyllithium (see Japanese Unexamined Patent Publication (hereinafter abbreviated to "JP-A") S63-48317, JP-A H1-172413 and JP-A H5-331349). According to the proposed method, the impact resistance of the styrene resin shaped article is improved by the incorporation of the styrene-butadiene block copolymer, but, another problem arises in that the blend of styrene resin with the styrene-butadiene block copolymer is difficult to dry with a satisfying efficiency by a conventional extrusion drier in the production process, and the drying thereof requires a large energy. A further problem arises in that, when the blend of styrene resin with the styrene-butadiene block copolymer is dried to a great extent, the dried product contains an increased amount of gel which results in a shaped article having a large amount of fish eyes.

A composition comprising the modifier and optional ingredients such as a heat stabilizer and a plasticizer is referred to as "resin modifying composition". A composition comprising a base resin and the modifier, or a composition comprising the composition for modifying a resin, is referred to as "modified resin composition". A shaped article of the modified resin composition is referred to as "modified resin shaped article".

Disclosure of the Invention

Problems to Be Solved by the Invention

An object of the present invention is to provide a block copolymer which can give, when it is used as a modifier for a resin, a modified resin composition having improved processability and shapability, and giving a modified resin shaped article with minimized fish eyes as well as improved impact resistance. Further objects thereof are to provide a composition for modifying a resin, which comprises said block copolymer; and to provide a modified resin composition comprising said composition for modifying a resin.

Means for Solving the Problems

The present inventors made extensive researches and found that the above-mentioned objects can be attained by providing a block copolymer comprising a combination of two kinds of polymer blocks comprising specific monomer units and having different specific glass transition temperatures, which has a specific content of aromatic vinyl monomer units, and a specific viscosity of 5 weight % solution in styrene. The present invention has been completed based on the above-mentioned finding.

Thus, in accordance with the present invention, there is provided a block copolymer comprised of a polymer block or blocks (A) comprising conjugated diene monomer units and a polymer block or blocks (B) comprising conjugated diene monomer units and aromatic vinyl monomer units, wherein the block copolymer satisfies the following requirements (1) through (5):

(1) the polymer block or blocks (A) have a glass transition temperature in the range of -85°C to -40°C;
(2) the polymer block or blocks (B) have a glass transition temperature in the range of 30°C to 95°C;
(3) the content of aromatic vinyl monomer units in the block copolymer is at least 0.5% by weight but lower than 30% by weight, based on the total weight of the block copolymer; and

(4) the viscosity of a 5% by weight solution of the block copolymer in styrene is at least 0.1 mPa·s but smaller than 30 mPa·s.

(5) the content of vinyl bond in the portion of conjugated diene monomer units in the block copolymer is not larger than 40% by weight based in the total weight of the conjugated diene monomer units in the block copolymer.

In accordance with the present invention, there is further provided a composition for modifying a resin, which comprises the above-mentioned block copolymer.

In accordance with the present invention, there is further provided a modified resin composition comprising the above-mentioned composition for modifying a resin, and a base resin.

Effects of the Invention

The present invention provides a block copolymer which can give, when it is used as a modifier for a resin, a modified resin composition having improved processability and shapability, and giving a modified resin shaped article with minimized fish eyes as well as improved impact resistance. Further the present invention provides a resin modifying composition, i.e., a composition for modifying a resin, which comprises said block copolymer; and further provides a modified resin composition comprising said resin modifying composition and a base resin.

Best Mode for Carrying Out the Invention

The block copolymer of the present invention comprises at least two kinds of polymer blocks, i.e., polymer block (A) and polymer block (B).

One of the polymer blocks constituting the block copolymer of the present invention, i.e., polymer block (A), comprises at least conjugated diene monomer units and has a glass transition temperature in the range of -85 to -40°C, preferably -85 to -50°C. If the glass transition temperature of the polymer block (A) is too low, the block copolymer is difficult to dry in the production process, and tends to be heated to an undue extent for drying. Thus the block copolymer is easily deteriorated and gives a modified resin shaped article with fish eyes. In contrast, if the glass transition temperature of the polymer block (A) is too high, a resulting modified resin composition has poor impact resistance.

The monomer for forming the conjugated diene monomer units in the polymer block (A) is not particularly limited provided that the monomer is a conjugated diene. As specific examples of the conjugated diene monomer, there can be mentioned 1,3-butadiene, 2-methyl-1,3-butadiene (isoprene), 2,3-dimethyl-1,3-butadiene, 2-chloro-1,3-butadiene, 1,3-pentadiene and 1,3-hexadiene. Of these, 1,3-butadiene and 2-methyl-1,3-butadiene are preferable. 1,3-Butadiene is especially preferable because it is not readily subject to scission of polymer chain and exhibits good stability. These conjugated diene monomers may be used either alone or as a combination of at least two thereof.

The polymer block (A) may comprise monomer units other than the conjugated diene monomer units. Especially in the case when the conjugated diene monomer units in the polymer block (A) cannot form a polymer block having a glass transition temperature in the range of -85 to -40°C, it is necessary to use monomer units other than the conjugated diene monomer units, in addition to the conjugated diene monomer units in the polymer block A. The monomer units other than the conjugated diene monomer units are not particularly limited, but said monomer units preferably include aromatic vinyl monomer units.

The monomer for forming the aromatic vinyl monomer units in the polymer block (A) includes aromatic vinyl monomers such as, for example, styrene, α-methylstyrene, 2-methylstyrene, 3-methylstyrene, 4-methylstyrene, 2-ethylstyrene, 3-ethylstyrne, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene and vinylnaphthalene. Of these, styrene, α-methylstyrene and 4-methylstyrene are preferable. Styrene is especially preferable. These aromatic vinyl monomers may be used either alone or as a combination of at least two thereof.

The polymer block or blocks (A) can comprise the conjugated diene monomer units and the aromatic vinyl monomer units at an appropriate proportion, but, the ratio in amount of aromatic vinyl monomer units/conjugated diene monomer units is usually in the range of 0/100 to 85/15 by weight, preferably 5/95 to 70/30, and more preferably 10/90 to 40/60.

The polymer block or blocks (A) may comprise monomer units other than the conjugated diene monomer units and the aromatic vinyl monomer units, and, as specific examples of such monomer units in the polymer block or blocks (A), there can be mentioned monomer units derived from α,β-unsaturated nitriles such as acrylonitrile and methacrylonitrile; unsaturated carboxylic acids and their anhydrides such as acrylic acid, methacrylic acid and maleic anhydride; unsaturated carboxylic acid esters such as methyl methacrylate, ethyl acrylate and butyl acrylate; and non-conjugated dienes such as 1,5-hexadiene, 1,6-heptadiene, 1,7-octadiene, dicyclopentadiene and 5-ethylidene-2-norbornene. The amount of these monomer units is preferably in the range of 0 to 5% by weight based on the weight of the polymer block or blocks (A). In the case when the polymer block or blocks (A) comprise at least two kinds of monomer units, the mode in which said at least two kinds of monomer units are bonded together is not particularly limited.

Another of the polymer blocks constituting the block copolymer of the present invention, i.e., polymer block (B), comprises at least conjugated diene monomer units and aromatic vinyl monomer units, and has a glass transition temperature in the range of 30 to 95°C, preferably 40 to 95°C and more preferably 50 to 93°C. If the glass transition temperature of the polymer block (B) is too low, the block copolymer is often difficult to coagulate and thus the production thereof is liable to be difficult. In contrast, the glass transition temperature of the polymer block (B) is too high, the block copolymer is difficult to dry in the production process, and tends to be heated to an undue extent for drying. Thus the block copolymer is easily deteriorated and gives a modified resin shaped article with fish eyes and having poor impact resistance.

The monomer for forming the conjugated diene monomer units in the polymer block or blocks (B) is not particularly limited provided that the monomer is a conjugated diene. The conjugated diene monomer includes, for example, those which are mentioned above as the conjugated diene monomers for the polymer block or blocks (A). Of the conjugated diene monomers, 1, 3-butadiene and 2-methyl-1,3-butadiene are preferable. 1,3-Butadiene is especially preferable because it is not readily subject to scission of polymer chain and exhibits good stability. These conjugated diene monomers may be used either alone or as a combination of at least two thereof.

The monomer for forming the aromatic vinyl monomer units in the polymer block or blocks (B) includes, for example, aromatic vinyl monomers which are mentioned above as the optional aromatic vinyl monomers for forming the aromatic vinyl monomer units in the polymer block or blocks (A). Of the aromatic vinyl monomers, styrene is preferable. The aromatic vinyl monomers may be used either alone or as a combination of at least two thereof.

The polymer block or block (B) can comprise the conjugated diene monomer units and the aromatic vinyl monomer units at an appropriate proportion, but, the ratio of aromatic vinyl monomer units/conjugated diene monomer units is usually in the range of 99/1 to 50/50 by weight, preferably 98/2 to 60/40 by weight, and more preferably 90/5 to 70/30 by weight.

The polymer block or blocks (B) may comprise monomer units other than the conjugated diene monomer units and the aromatic vinyl monomer units, and, as specific examples of such monomer units in the polymer block or blocks (B), there can be mentioned those which are derived from the above-mentioned monomers optionally used in combination with the conjugated diene monomers and the aromatic vinyl monomers, for forming the optional monomer units in the polymer block or blocks (A). The amount of the optional monomer units is preferably in the range of 0 to 5% by weight based on the weight of the polymer block or blocks (B). The mode in which at least two kinds of monomer units in the polymer block or blocks (B) are bonded together is not particularly limited.

The block copolymer according to the present invention comprises usually at least one polymer block (A) and at least one polymer block (B). The block copolymer can comprise two or more polymer blocks (A) and two or more polymer blocks (B). The polymer block may comprise a polymer block or blocks, other than the polymer block or blocks A and the polymer block or blocks B. Such polymer block or blocks are not particularly limited, and, as specific examples thereof, there can be mentioned a polymer block having a glass transition temperature higher than 95°C, a polymer block having a glass transition temperature higher than -40°C and lower than 30°C, a polymer block having a glass transition temperature lower than -85°C, a polymer block having a glass transition temperature in the range of -85 to -40°C but not containing conjugated diene monomer units, and, a polymer block having a glass transition temperature in the range of 30 to 95°C but not containing either one or both of the conjugated diene monomer units and the aromatic vinyl monomer units.

The mode in which the polymer blocks (A) and (B) and other optional blocks within the block copolymer of the present invention are bonded together is not particularly limited, and the shape of mode includes, for example, straight-chain shape, a comblike shape and starlike shape.

In the block copolymer of the present invention, the ratio of [weight of polymer block or blocks (A)]/[weight of polymer block or blocks (B)] is preferably in the range of 0.43 to 49, more preferably 0.67 to 30 and especially preferably 1 to 9. Note, in the case when the block copolymer comprises two or more polymer blocks (A), the above-mentioned term "weight of polymer block or blocks (A)" refers to the total weight of the polymer blocks (A). Similarly in the case when the block copolymer comprises two or more polymer blocks (B), the above-mentioned term "weight of polymer block or blocks (B)" refers to the total weight of the polymer blocks (B). When the weight ratio of (A) / (B) is too small, the block copolymer is liable to collapsed and thus a problem arises in the production thereof. In contrast, when the weight ratio of (A) / (B) is too large, the block copolymer is liable to sticking and easily subject to cold flow, and thus, a problem arises in the production thereof.

The content of aromatic vinyl monomer units in the block copolymer of the present invention must be at least 0.5% by weight but smaller than 30% by weight, and is preferably at least 3% by weight but smaller than 30% by weight, based on the total weight of the block copolymer. When the content of aromatic vinyl monomer units in the block copolymer is too small, the block copolymer is difficult to dry in the production process, and tends to be heated to an undue extent for drying. Thus the block copolymer is easily deteriorated and gives a modified resin shaped article with fish eyes. In contrast, when the content of aromatic vinyl monomer units in the block copolymer is too large, a resulting modified resin composition has poor impact resistance.

The content of conjugated diene monomer units in the block copolymer of the present invention is preferably in the range of 70 to 99.5% by weight, more preferably 70 to 97% by weight, based on the total weight of the block copolymer.

The content of the optional monomer units, other than the conjugated diene monomer units and the aromatic vinyl monomer units, in the block copolymer of the present invention is not particularly limited, but is preferably not lager than 25% by weight, more preferably not larger than 10% by weight and especially preferably not larger than 5% by weight, based on the weight of the block copolymer.

The proportion of vinyl bond (i.e., the sum of 1,2-vinyl bond and 3,4-vinyl bond) in the conjugated diene monomer units portion in the block copolymer of the present invention is not larger than 40% by weight and especially preferably in the range of 5 to 30% by weight, based on the total conjugated diene monomer units to give a modified resin composition comprising the block copolymer, which exhibits more improved impact resistance.

The viscosity of a 5% by weight solution in styrene of the block copolymer of the present invention as measured at 25°C must be at least 0.1 mPa·s but smaller than 30 mPa·s. Preferably the solution viscosity is in the range of 1 to 29 mpa·s, more preferably 3 to 28 mPa·s. If the solution viscosity of the block copolymer is too low, a resulting modified resin composition has poor impact strength. In contrast, if the solution viscosity is too high, a resulting modified resin composition has processability and shapability.

The block copolymer of the present invention usually has a weight average molecular weight (Mw) in the range of 1,000 to 1,000,000, preferably 5,000 to 750,000 and more preferably 10,000 to 500,000 as measured by gel permeation chromatography using a differential refractometer and as expressed in terms of that of polystyrene. When the weight average molecular weight is too low, a resulting modified resin composition often has poor impact strength. In contrast, when the weight average molecular weight is too high, a solution of the block copolymer in a solvent tends to have undesirably large solution viscosity and the block copolymer is liable to become difficult to handle in the production process of the block copolymer.

The molecular weight distribution as defined by a ratio (Mw/Mn) of weight average molecular weight (Mw) to number average molecular weight (Mn) of the block copolymer is preferably in the range of 1 to 1.5. When the molecular weight distribution (Mw/Mn) is too broad, a resulting modified resin composition often has poor impact strength.

The Mooney viscosity ($ML_{1+4}$, 100°C) of the block copolymer of the present invention is not particularly limited but is usually in the range of 10 to 140, preferably 15 to 70 and more preferably 20 to 50. When the Mooney viscosity is too low, a resulting modified resin composition often has poor impact strength. In contrast, when the Mooney viscosity is too high, the block copolymer tends to become difficult to dry in the production process and is troublesome.

The block copolymer of the present invention can be produced by the conventional polymerization procedure adopted for the production of the hitherto known block copolymers. For example, a polymerization method is adopted wherein a first monomer for forming one of polymer block (A) and polymer block (B) is polymerized using a polymerization initiator in a reaction vessel, and then, a second monomer for forming the other polymer block is added into the reaction vessel to conduct further polymerization. If desired, another monomer may be added and polymerized in the reaction vessel before or after the polymerization stages for polymer block (A) and polymer block (B) or between the polymerization stages for polymer block (A) and polymer block (B).

A polymerization initiator used for the production of the block copolymer of the present invention includes organic alkali metal compounds, organic alkaline earth metal compounds, and organic lanthanoid series rare earth metal compounds, which are generally known as exhibiting a catalytic activity for anion polymerization of conjugated monomers.

Preferable examples of the organic alkali metal compounds are organic lithium compounds having at least one lithium atom in the molecule, and, as specific examples thereof, there can be mentioned organic monolithium compounds such as ethyllithium, n-propyllithium, isopropyllithium, n-butyllithium, sec-butyllithium, tert-butyllithium, hexyllithium, phenyllithium, stilbenelithium, dialkylaminolithium, diphenylaminolithium and di-trimethylsilylaminolithium; organic dilithium compounds such as methylenedilithium, tetramethylenedilithium, hexamethylenedilithium, isoprenyl-dilithium and 1,4-dilithio-ethylcyclohaxane; and organic trilithium compounds such as 1,3,5-trilithiobenzene. Of these, organic monolithium compounds are especially preferable.

As specific examples of the organic alkaline earth metal compounds used as the polymerization initiator, there can be mentioned n-butylmagnesium bromide, n-hexylmagnesium bromide, ethoxycalcium, calcium stearate, tert-butoxystrontium, ethoxybarium, isopropoxybarium, ethylmercaptobarium, tert-butoxybarium, phenoxybarium, diethylaminobarium, barium stearate and ethylbarium.

As specific examples of the organic lanthanoid series rare earth metal compounds used, there can be mentioned composite catalysts comprising a lanthanoid series rare earth metal compound such as a neodymium-, samarium- or gadolinium-containing compound with alkylaluminum, al kylaluminum halide and alkylaluminum hydride.

The polymerization initiator further includes, for example, metallocene catalysts containing titanium, vanadium, samarium or gadolinium, which form a uniform catalyst in an organic solvent and can perform a living polymerization.

The polymerization initiators may be used either alone or as a combination of at least two thereof.

The amount of polymerization initiator varies depending upon the molecular weight of the target block copolymer and is not particularly limited. Usually the amount of polymerization initiator is in the range of 0.01 to 20 millimoles, preferably 0.05 to 15 millimoles and more preferably 0.1 to 10 millimoles, based on 100 g of the total monomers used for the production of the block copolymer.

The solvent used for polymerization is not particularly limited provided that it is inactive to the polymerization initiator. The solvent includes, for example, chainlike hydrocarbon solvents, cyclic hydrocarbon solvents and mixtures of these solvents. The chainlike solvents include, for example, chainlike alkanes and alkenes having 4 to 6 carbon atoms, such as n-butane, isobutene, 1-butene, isobutylene, trans-2-butene, cis-2-butene, 1-pentene, trans-2-pentene, cis-2-pentene, n-pentane, isopentane, neopentane and n-hexane. The cyclic hydrocarbon solvents include, for example, aromatic hydrocarbons such as benzene, toluene and xylene, and alicyclic hydrocarbons such as cyclopentane and cyclohexane. These solvents may be used either alone or as a mixture of at least two thereof.

The amount of solvent used for polymerization is not particularly limited, but is usually such that the concentration of the block copolymer in a polymer solution as formed by polymerization is in the range of 5 to 50% by weight, preferably 10 to 40% by weight and more preferably 20 to 30% by weight.

To suppress the formation of undesirably low molecular weight polymers caused by, for example, chain transfer reaction, it is preferable to avoid or minimize the incorporation of polymerization inhibiting substances in a reaction vessel, such as, for example, 1, 2-butadiene and acetylene, which are contained as impurities in the solvent and conjugated diene monomer. The amount of the polymerization inhibiting substances should be usually not larger than 200 ppm, preferably not larger than 100 ppm and more preferably not larger than 20 ppm, in the polymerization vessel.

In the polymerization step for producing the block copolymer, a Lewis base compound can be added in a reaction vessel used for polymerization to control the structure of each polymer block in the block copolymer. As specific examples of the Lewis base compound, there can be mentioned ethers such as tetrahydrofuran, diethyl ether, dioxane, ethylene glycol dimethyl ether, ethylene glycol dibutyl ether, diethylene glycol dimethyl ether and diethylene glycol dibutyl ether; tertiary amines such as tetarmethylethylenediamine, trimethylamine, triethylamine, pyridine and quinuclidine; alkali metal alkoxides such as potassium-t-amyl oxide and potassium-t-butyl oxide; and phosphines such as triphenylphosphine. These Lewis base compounds can be appropriately chosen provided that the object of the present invention is achieved, and they may be used either alone or as a combination of at least two thereof.

The time at which the Lewis base compound is added at the polymerization is not particularly limited and can be appropriately chosen depending upon the particular structure of the target block copolymer. For example, the Lewis base compound can be added prior to the initiation of polymerization, or after a part of the polymer blocks has been prepared by polymerization, or, can be added in divisions prior to the initiation of polymerization and after a part of the polymer blocks has been prepared by polymerization.

The polymerization temperature for the production of the block copolymer is usually in the range of 10 to 150°C, preferably 30 to 130°C and more preferably 40 to 90°C. The time required for the polymerization varies depending upon the other conditions, but is usually within 48 hours, and preferably in the range of 0.5 to 10 hours. In the case when the polymerization temperature is difficult to control, the polymerization temperature is preferably controlled at reflux in a reaction vessel equipped with a reflux condenser. Preferably the polymerization is carried out in an inert gas atmosphere such as nitrogen gas. The polymerization pressure is not particularly limited provided that the mixture of monomers and solvent can be maintained in a liquid state in the above-mentioned range of polymerization temperature.

The block copolymer of the present invention may be coupled with a coupling agent. The coupled block copolymer used can be coagulated for deposition more easily than uncoupled block copolymer. The coupling agent used is not particularly limited, and, as specific examples thereof, there can be mentioned tin-containing coupling agents such as dimethyldichlorotin, methyltrichlorotin and tin tetrachloride; silicon-containing coupling agents such as dimethyldichlorosilane, methyltrichlorosilane, tetrachlorosilane, diphenoxydichloro-silane, hexachlorodisilane, bis(trichlorosilyl)methane, 1,2-bis(trichlorosilyl)ethane, tetramethoxysilane, hexamethoxydisilane, bis(trimethoxysilyl)methane, 1,2-bis(trimethoxysilyl)ethane, tetraethoxysilane, hexaethoxydisilane, bis(triethoxysilyl)methane and 1,2-bis(triethoxysilyl)ethane; epoxy coupling agents such as epoxidized linseed oil, epoxydized soybean oil and epoxidized polybutadiene; metal chloride coupling agents such as titanium tetrachloride; phosporus-containing coupling agents; isocyanate coupling agents; and silicone oil coupling agents.

The coupling ratio is not particularly limited and is usually in the range of 30 to 100% by weight, preferably 50 to 100% by weight. The term "coupling ratio" as used herein refers to a ratio by weight of polymer molecules having a molecular weight at least two times of the peak top molecular weight of the block copolymer having an active terminal, which is before the coupling reaction, to the whole weight of the finally obtained block copolymer.

When the polymerization is completed, if desired, there can be added a polymerization terminator such as water, methanol, ethanol, propanol, hydrochloric acid or citric acid; a heat stabilizer; an extender such as an mineral process oil or a synthetic process oil; or a neutralizing agent. Then the block copolymer is recovered from the polymer solution. For the recovery of the block copolymer, a known method can be adopted, which includes, for example, a direct drying method for removing the solvent from the polymer solution, and a conventional steam stripping method which is widely adopted for the separation of polymers.

In the case when the block copolymer is recovered as a slurry, for example, by a steam striping method, the recovered slurry is usually dehydrated by a dehydrator such as extruder-type squeezer to give a crumb having moisture content not higher than a predetermined value, and then the crumb is dried by a dryer such as, for example, a band dryer or an expansion extrusion dryer. If the block copolymer of the present invention contains a certain amount or more (for example, at least 1.5% by weight) of residual volatile ingredients, a resulting modified resin composition is liable to become turbid in white. Therefore, the recovered block copolymer must be thoroughly dried.

The content of residual volatile ingredients in the block copolymer of the present invention can easily be reduced as compared with the conventional rubbery block copolymers used for modifying a resin. Therefore, the drying can be conducted with an enhanced efficiency. Thus, the reduction of residual volatile ingredients can easily be effected without applying large heat, and hence the block copolymer is not easily deteriorated with the results that the formation of fish eyes in the modified resin composition comprising the block copolymer can be avoided or minimized.

As mentioned above, the block copolymer of the present invention can easily be dried in the production process, and the production thereof can be conducted with an enhanced efficiency. Therefore, the block copolymer gives a modified resin composition having good processability and shapability and giving a modified resin shaped article which does not have or has a minimized amount of fish eyes. Thus, the block copolymer of the present invention is especially suitable as a modifier for a resin.

The resin modifying composition according to the present invention comprise the above-mentioned block copolymer according to the present invention.

When the block copolymer of the present invention is incorporated in a base resin, a resulting modified resin shaped article exhibits improved and modified properties such as, for example, improved impact strength, transparency and luster. Prior to the incorporation of the block copolymer with a base resin, the block copolymer can be formulated into a resin modifying composition of the present invention by mixing the block copolymer with conventional ingredients. The ingredients used include, for example, a heat stabilizer, a plasticizer, a lubricant, a ultraviolet absorber, a colorant, a pigment, a release agent, an antistatic agent and a fire retardant. Preferably at least heat stabilizer is used.

The heat stabilizer is not particularly limited, and includes, for example, phosphite compound heat stabilizers, phosphonite compound heat stabilizers, acrylate compound heat stabilizers, phenolic compound heat stabilizers and amine compound heat stabilizers. These heat stabilizers may be used either alone or as a combination of at least two thereof.

The amount of heat stabilizer (in the case when two or more heat stabilizers are used in combination, the total amount thereof) is usually in the range of 0.01 to 0.5 part by weight, preferably 0.02 to 0.3 part by weight and more preferably 0.03 to 0.25 part by weight, based on 100 parts by weight of the block copolymer. When the amount of heat stabilizer is within this range, the block copolymer in the resin modifying composition is not readily colored nor deteriorated, and gives a modified resin composition exhibiting good color tone and luster.

The resin modifying composition of the present invention can be prepared by incorporating various ingredients in the above-mentioned block copolymer, according to the need. The procedure for incorporation is not particularly limited, but preferably, the ingredients are incorporated in the polymer solution as-obtained by polymerization, prior to the coagulation of the polymer solution, because the ingredients can easily be dispersed in the polymer solution.

The modified resin composition of the present invention comprises the above-mentioned resin modifying composition and a base resin.

The base resin used for the preparation of the resin composition is not particularly limited, but preferably includes aromatic vinyl resins and olefin resins.

As specific examples of the aromatic vinyl resins, there can be mentioned styrene resins such as an acrylonitrile-acrylate-styrene resin, an acrylonitrile-ethylene-styrene resin, an acrylonitrile-styrene resin, an acrylonitrile-butadiene-styrene resin, a polystyrene resin, a high-impact polystyrene resin, a methyl methacrylate-butadiene-styrene resin and a methyl methacrylate-styrene resin. As specific examples of the olefin resins, there can be mentioned polyethylene and polypropylene. Further, the base resin includes, for example, polyphenylene ether; polyamides; polycarbonate; polyacetals; and polyesters. Of these, the aromatic vinyl resins are preferable. These base resins may be used either alone or as a combination of at least two thereof.

The ratio of the resin modifying composition to the base resin in the modified resin composition of the present invention is such that the ratio of the block copolymer to the base resin is usually in the range of 2/98 to 50/50 by weight, preferably 3/97 to 40/60 by weight and more preferably 5/95 to 30/70 by weight. When the proportion of the block copolymer is too large, the modified resin composition tends to have poor luster, rigidity, weather resistance and hardness. In contrast, when the proportion of the block copolymer is too small, the modified resin composition tends to have poor impact resistance.

The process for producing the modified resin composition of the present invention is not particularly limited, and includes, for example, a process wherein the base resin and the resin modifying composition are mixed together by an appropriate procedure, and a process wherein a monomer to be used for the preparation of the base resin (which monomer is hereinafter called as "monomer for resin" when appropriate) is polymerized in the presence of the resin modifying composition. The latter process is preferable because a modified resin composition having excellent impact resistance can be obtained.

The mixing of the base resin with the resin modifying composition can be conducted by using mixing kneaders such as a single screw extruder or a multiple screw extruder such as a twin screw extruder, a Banbury mixer, a roll and a kneader. The mixing temperature is preferably in the range of 100 to 250°C.

In the process for polymerizing a monomer for resin in the presence of the resin modifying composition, a liquid for polymerization is prepared by dissolving or dispersing the block copolymer in the monomer for resin, and the liquid for polymerization is polymerized in a polymerization vessel. The polymerization procedure is not particularly limited, and any of bulk polymerization procedure, suspension polymerization procedure, solution polymerization procedure and emulsion polymerization procedure can be adopted.

In the bulk polymerization procedure, the resin modifying composition and a polymerization initiator are dissolved or dispersed in the monomer for resin, and if desired, a molecular weight modifier, a lubricant and other ingredients are added, and the polymerization is carried out while being stirred in an inert gas atmosphere. When an aromatic vinyl monomer is polymerized by the bulk polymerization procedure, the polymerization is preferably carried out at a temperature of 60 to 200°C.

In the suspension polymerization procedure, the resin modifying composition and a polymerization initiator are dissolved or dispersed in the monomer for resin, and if desired, a molecular weight modifier, a lubricant and other ingredients are added, in a manner similar to that mentioned above with regard to the bulk polymerization procedure. Then the thus-obtained solution was dispersed in an aqueous solution having a suspension stabilizer dissolved therein. The polymerization is carried out while the suspension state is kept under stirring. After completion of polymerization, the polymerization mixture is thoroughly washed with water to remove the suspension stabilizer, and then a modified resin composition is recovered. When an aromatic vinyl monomer is polymerized by the suspension polymerization procedure, the polymerization is preferably completed at a temperature of 60 to 150°C.

In the solution polymerization procedure, the resin modifying composition and a polymerization initiator are dissolved in the monomer for resin, in a manner similar to that in the bulk polymerization procedure. If desired, a molecular weight modifier, a lubricant, an organic solvent for controlling viscosity, and other ingredients are added, and the polymerization is carried out while being stirred in an inert gas atmosphere. When an aromatic vinyl monomer is polymerized by the solution polymerization procedure, the polymerization is preferably carried out at a temperature of 60 to 200°C.

A two stage polymerization procedure can be adopted wherein an initial stage polymerization is carried out by the bulk polymerization procedure until the conversion of the monomer for resin reaches a value in the range of about 10 to 50% by weight, and then a succeeding polymerization stage is carried out by the suspension or solution polymerization procedure.

After completion of the polymerization, coagulation, drying and other treatments are carried out in the conventional manner for recovering a modified resin composition.

In the case when a thermoplastic resin is used as the base resin, the modified resin composition of the present invention preferably has a melt mass flow rate such as that the lower limit thereof is 5, more preferably 10, and the upper limit thereof is 80, as measured according to JIS K7210 at 220°C under a load of 10 kg.

The modified resin composition of the present invention can have various ingredients incorporated therein according to the need, which are conventionally used in the resin industry. The ingredients include, for example, a heat stabilizer, mineral oil, liquid paraffin, organic and inorganic fillers, a weather stabilizer, a light stabilizer, a plasticizer, a lubricant, an ultraviolet absorber, a colorant, a pigment, a mold release agent, an antistatic agent and a fire retardant.

Examples

The invention will now be specifically described by the following examples and comparative examples wherein parts and % are by weight unless otherwise specified.

Characteristics of block copolymers, base resins and resin compositions were evaluated by the following methods.

[Weight average molecular weight of block copolymer]

The weight average molecular weight was expressed in terms of that of polystyrene as measured by gel permeation chromatography using tetrahydrofuran as carrier. More specifically, a high speed liquid chromatography apparatus HLC8220 (available from Tosoh Corporation), and two columns GMH-HR-H (available from Tosoh Corporation) were used. A differential refractometer was used as detector. Measurement was made using 0.1 ml of a polymer solution in tetrahydrofuran with a concentration of 0.045% as a test sample. The volume rate in flow at measurement was 1 ml/min.

[Monomer units content in block copolymer and vinyl bond content in conjugated diene monomer units portion in block copolymer]

Measurements of the monomer unit contents and the vinyl bond content were made by proton NMR using a 400-MHz-NMR apparatus (available from JEOL Co.).

[Glass transition temperature of polymer block]

A glass transition temperature of block copolymer was measured using a differential scan calorimeter (available from Perkin-Elmer Corporation) under the following conditions. The temperature of a test sample was elevated from room temperature (23°C) to 120°C, maintained at 120°C for 10 minutes, lowered to -120°C at a lowering rate of 100°C/min, maintained at -120°C for 10 minutes, and then elevated to 150°C at an elevation rate of 60°C/min. Glass transition temperature was expressed as an average value at two medial points.

[Viscosity of 5% styrene solution of block copolymer]

Measurement was made by Ostwald viscometer at 25°C.

[Coagulability]

Coagulability was evaluated by the length of crumbs at the operation of removing solvent in a steam stripping process. If crumbs have a too large size, the residual solvent content tends to be large and sometimes causes troubles such as clogging of pipes.
The steam stripping was carried out as follows. Steam was blown at a rate of 200 kg per hour under a pressure of 300 kPa against a stream of polymer solution flowing at a flow rate of 150 liters per hour. The mixture of the polymer solution and steam was continuously fed into a coagulation tank, and steam and water were further fed into the coagulation tank. While the content of the tank was maintained at 105°C, the content was stirred so that the ratio of the polymer to water was 5/95 by weight to collect the solvent and unreacted monomers, thereby recovering a mixture of coagulated polymer and water.
The largest length of each coagulated polymer (i.e., crumb) was measured. The coagulability was evaluated by the average largest length of 500 crumbs, and was expressed according to the following three ratings.
A: Average largest length is at least 0.5 but smaller than 2.0 cm.
B: Average largest length is at least 2.0 but smaller than 5.0 cm.
C: Average largest length is 5.0 cm or more.

[Residual volatile content in resin modifying composition]

The obtained resin modifying composition was dried at 110°C in an oven for one hour, and, the residual volatile content ($V_0$) in the composition was calculated from the following formula.

$$V_0(\%) = [(S-B_0)/S] \times 100$$

where S and $B_0$ are weight of crumb as measured before and after the drying, respectively.
In the comparative examples, the residual volatile content ($V_0$) as measured by the above-mentioned method was larger than 1.5% by weight. Therefore, the resin modifying composition was re-introduced into an expansion extrusion dryer (whole length: 1,200 mm, diameter: 250 mm) at 135°C to reduce the residual volatile content. The residual volatile content was measured on the re-dried extrudate by the same method as mentioned above.

(Gel content in resin modifying composition)

The obtained resin modifying composition was dried at 60°C in a vacuum drier for one hour. 5 g of the dried composition was placed in 95 g of xylene in an Erlenmeyer flask, and, the mixture was stirred for 4 hours by a magnet stirrer. The gel particles (xylene insolubles) were collected by filter paper classified into two kinds according to JIS P3801. The gel particles on the filter were dyed with osmic acid. The dyed gel particles were observed by naked eyes, and the gel content was evaluated according to the four ratings, set forth below.

In the comparative examples, the residual gel content as measured by the above-mentioned method was larger than 1.5% by weight. Therefore, the resin modifying composition was re-introduced into an expansion extrusion dryer (whole length: 1,200 mm, diameter: 250 mm) maintained at 135°C to reduce the water content. The gel content was measured on the re-dried extrudate by the same method as mentioned above. For reference, the gel content was measured also before the re-drying in the comparative examples.

Four ratings

1: No gel particle having a diameter at least 0.5 mm was found.
2: Several gel particles having a diameter of 0.5 to 1 mm were found.
3: Gel particles having a diameter of approximately 1 mm were found over the whole filter.
4: Gel particles having a diameter of approximately 1 mm and gel particles having a diameter of approximately 2.5 mm were found.

[Charpy impact resistance of modified resin composition]

A notched test sample of modified resin composition was tested according to JIS K7111 at 23°C.

[Melt mass flow rate of modified resin composition]

Mel mass flow rate was measured according to 220°C under a load of 10 kg. When the melt mass flow rate is at least 10 g/10 min, the modified resin composition exhibits good processability and shapability.

[Fish eyes in modified resin shaped article]

The modified resin composition was extruded at 200°C through a single screw extruder with a 40 mm diameter provided with a T-die with a width of 30 cm. The extrudate was stretched 1.5 times to give film having a thickness of 0.2 mm. When 30 minutes elapsed from the film formation, the number of fish eyes having a diameter of at least 3 mm were counted on a square region of 30 cm $\times$ 10 cm.

The occurrence of fish eyes was expressed according to the following two ratings.

Found (F): The number of fish eyes having a diameter of at least 3 mm was at least 5.

Not found (N): The number of fish eyes having a diameter of at least 3 mm was not more than 4.

Example 1

A 2,000 liter volume autoclave equipped with a condenser, a stirrer and a jacket was charged with 600 kg of a mixed solvent comprised of 30% of n-butane and 70% of cyclohexane, 8.0 kg of styrene and 24.0 kg of 1,3-butadiene, and further 0.17 mole of tetramethylethylene diamine was added. The temperature of the content was adjusted to 50°C. A solution of 0.9 mole/liter of n-butyllithium in hexane was gradually dropwise added to the content in the autoclave, while the pressure increase and the temperature elevation were observed, until immediately before the proceeding of polymerization reaction to thereby removing the ingredients deactivating the polymerization reaction.

Then a n-butyllithium solution in hexane, prepared in advance, of the same concentration as mentioned above was added to the content in the autoclave in an amount of 3.3 moles as the amount of lithium in the content to thereby initiate the polymerization. When 10 minutes elapsed from the initiation of polymerization, 4.0 kg of styrene and 84.0 kg of 1,3-butadiene were added over a period of 60 minutes. When 30 minutes elapsed from the initiation of polymerization, the temperature reached 80°C. The content was maintained at 80°C by controlling the condenser. When 30 minutes elapsed from the addition of monomers in the latter stage, the polymerization conversion reached substantially 100% which showed the completion of polymerization for polymer block (A).

Then 28.5 kg of styrene and 1.5 kg of 1,3-butadiene were added to the polymerization mixture over a period of 30 minutes. When 40 minutes elapsed from the completion of monomer addition, the polymerization conversion reached substantially 100% which revealed the completion of polymerization for polymer block (B). Then 2.0 moles of methanol was added to stop the polymerization.

After termination of the polymerization, 0.18 part, based on 100 parts of the block copolymer, of a heat stabilizer [2,9-bis(n-octylthiomethyl)-6-methylphenol, "Irganox 1520L" available from Ciba Speciality Chemicals Co.] was added and the mixture was rendered uniform. The uniform mixture was subjected to steam stripping to remove solvent to give a slurry wherein a resin modifying composition comprising the block copolymer and the heat stabilizer was dispersed.

Thereafter the temperature of the slurry of the resin modifying composition was adjusted to about 70°C, and the slurry was dehydrated by using an extrusion type squeezer (total length: 890 mm, diameter: 230 mm, length of portion having slit: 482 mm, slit width: 0.1 mm, revolution of drawing: 100 rpm, temperature: 40°C) to give a water-containing crumb. The crumb was dried by an expansion extrusion dryer (total length: 1200 mm, diameter: 250 mm) maintained at 135°C. The die head of the dryer was maintained at about 150°C. The extruded crumb was further dried by a warm air dryer (temperature: 70°C, flow rate of air: 100 liter/min, residence time: 10 min), connected downward from the expansion extrusion dryer, to give a resin modifying composition A.

The polymerization conditions for the resin modifying composition A are shown in Table 1. The resin modifying composition A was evaluated for the following properties: glass transition temperature, bound styrene content (content of aromatic vinyl monomer units), bound butadiene content (content of conjugated diene monomer units), vinyl bond content (proportion of vinyl bond), weight average molecular weight, Mooney viscosity, viscosity of 5% by weight solution in styrene, residual volatile content and gel content. The evaluation results are shown in Table 4.

A modified resin composition was made from the resin modifying composition A by using a continuous polymerization reactor comprising three completely mixing type reacting vessels connected in series, as follows.

A first reaction vessel was charged with 13.4 parts of the resin modifying composition A, 62.2 parts of styrene, 20.7 parts of acrylonitrile and 3.45 parts of ethylbenzene to prepare a raw material solution. The raw material solution was continuously fed into a second reaction vessel while 0.05 part of an organic peroxide [1,1-bis(t-butylperoxy)-3,3,5-trimethylcyclohexane] was simultaneously and continuously added to the second vessel, thereby conducting polymerization.

The thus-obtained polymerization liquid was continuously fed from the second reaction vessel to a third reaction vessel while 0.2 part of t-dodecyl mercaptan was simultaneously and continuously added to the third reaction vessel. Then the polymerization liquid was fed to a volatile-removing vessel comprising a pre-heating vessel and a vacuum chamber. The total amount of monomers converted to polymer, as measured at the inlet of the volatile-removing vessel, was 65 parts. The residual monomers and the solvent were substantially completely removed, and then the polymerization mixture was subjected to a pelletizing step to give a modified resin composition.

Melt mass flow rate and Charpy impact resistance of the modified resin composition were evaluated. The modified resin composition was extrusion-shaped into a modified resin shaped article, and fish eyes of the shaped article were evaluated. The evaluation results are shown in Table 4.

Examples 2-5

By the same procedures and conditions as employed in Example 1, resin modifying compositions B through E were produced wherein the amounts of n-butyllithium, styrene, 1,3-butadinene and tetramethylethylene diamine were varied as shown in Table 1. All other conditions remained the same. Properties of the resin modifying compositions were evaluated by the same methods as in Example 1. The evaluation results are shown in Table 4.

Modified resin compositions were made from the resin modifying compositions by using a continuous polymerization reactor comprising three stirring reacting vessels connected in series, in the same manner as in Example 1 wherein the amounts of styrene, acrylonitrile, ethylbenzene, organic peroxide and t-dodecyl mercaptan were varied as shown in Table 3. All other conditions remained the same. Properties of the modified resin compositions were evaluated by the same methods as in Example 1. The evaluation results are shown in Table 4.

Comparative Examples 1-7

By the same procedures and conditions as employed in Example 1, resin modifying compositions F through J and L were produced wherein the amounts of n-butyllithium, styrene, 1,3-butadinene and tetramethylethylene diamine were varied as shown in Table 1. All other conditions remained the same. Properties of the resin modifying compositions were evaluated by the same methods as in Example 1. The evaluation results are shown in Table 4. However, in Comparative Example 6, coagulability was very poor and the properties of the resin modifying composition could not be evaluated.

Modified resin compositions were made from the resin modifying compositions by using a continuous polymerization reactor comprising three stirring reacting vessels connected in series, in the same manner as in Example 1 wherein the amounts of styrene, acrylonitrile, ethylbenzene, organic peroxide and t-dodecyl mercaptan were varied as shown in Table 3. All other conditions remained the same. Properties of the modified resin compositions were evaluated by the same methods as in Example 1. The evaluation results are shown in Table 4.

Example 6

A 2, 000 liter volume autoclave equipped with a condenser, a stirrer and a jacket was charged with 600 kg of a mixed solvent comprised of 30% of n-butane and 70% of cyclohexane, 6.4 kg of styrene and 0.5 kg of 1,3-butadiene, and further 0.03 mole of tetramethylethylene diamine was added. The temperature of the content was adjusted to 50°C. A solution of 0.9 mole/liter of n-butyllithium in hexane was gradually dropwise added to the content in the autoclave, while the pressure increase and the temperature elevation were observed, until immediately before the proceeding of polymerization reaction to thereby removing the ingredients deactivating the polymerization reaction.

Then a n-butyllithium solution in hexane, prepared in advance, of the same concentration as mentioned above was added to the content in the autoclave in an amount of 0.4 mole as the amount of lithium in the content to thereby initiate the polymerization. When 30 minutes elapsed from the initiation of polymerization, the temperature reached 55°C. The content was maintained at 55°C by controlling the condenser. When 60 minutes elapsed from the time the temperature reached 55°C, the conversion reached substantially 100% which showed the completion of polymerization for polymer block (B).

Then a n-butyllithium solution in hexane, prepared in advance, having a concentration of 0.9 mole/liter was added to the content in an amount of 2.1 moles as the amount of lithium in the content. Further, 4.3 kg of styrene and 138.8 kg of 1,3-butadiene were added over a period of 60 minutes to again initiate the polymerization. When 60 minutes elapsed from the initiation of polymerization, the temperature reached 80°C. The content was maintained at 80°C by controlling the condenser. When 90 minutes elapsed from the time the temperature of the content reached 80°C, the polymerization conversion reached substantially 100% which showed the completion of polymerization for polymer block (A).

To the content, 0.25 mole, per mole of n-butyllithium (the total amount thereof added twice), of tetramethoxysilane was added. The coupling reaction was carried out at 70°C. When 60 minutes elapsed from the addition of tetramethoxysilane, 2.0 moles of methanol were added to stop the polymerization.

After termination of the polymerization, 0.18 part, based on 100 parts of the block copolymer, of a heat stabilizer [2,4-bis(n-octylthiomethyl)-6-methylphenol, "Irganox 1520L" available from Ciba Speciality Chemicals Co.] was added and the mixture was rendered uniform. The uniform mixture was subjected to steam stripping to remove solvent to give a slurry wherein a resin modifying composition was dispersed.

Thereafter a resin modifying composition M was made by the same procedures as mentioned in Example 1. Properties of the resin modifying composition were evaluated by the same method as in Example 1. Further, coupling percentage was measured. The evaluation results are shown in Table 5.

Modified resin composition was made from the resin modifying composition M by using a continuous polymerization reactor comprising three stirring reacting vessels connected in series, in the same manner as in Example 1 wherein the amounts of styrene, acrylonitrile, ethylbenzene, organic peroxide and t-dodecyl mercaptan were varied as shown in Table 3. All other conditions remained the same. Properties of the modified resin compositions and the modified resin shaped article were evaluated by the same methods as in Example 1. The evaluation results are shown in Table 5.

Examples 7 and 8

By the same procedures and conditions as employed in Example 6, resin modifying compositions N and O were produced wherein the amounts of n-butyllithium, styrene, 1, 3-butadinene, tetramethylethylene diamine and tetramethoxysilane were varied as shown in Table 2. All other conditions remained the same. Properties of the resin modifying compositions were evaluated by the same methods as in Example 6. The evaluation results are shown in Table 5.

Modified resin compositions were made from the resin modifying compositions by using a continuous polymerization reactor comprising three stirring reacting vessels connected in series, in the same manner as in Example 1 wherein the amounts of styrene, acrylonitrile, ethylbenzene, organic peroxide and t-dodecyl mercaptan were varied as shown in Table 3. All other conditions remained the same. Properties of the modified resin compositions and the modified resin shaped article were evaluated by the same methods as in Example 1. The evaluation results are shown in Table 5.

Table 1

| Amounts of ingredients added | Examples | | | | | Comparative Examples | | | | | | |
|---|---|---|---|---|---|---|---|---|---|---|---|---|
| | 1 | 2 | 3 | 4 | 5 | 1 | 2 | 3 | 4 | 5 | 6 | 7 |
| 1st stage polymerization (polymer block A) | | | | | | | | | | | | |
| Polymerization initiator | | | | | | | | | | | | |
| n-Buli (mol) | 3.3 | 1.5 | 2.0 | 1.3 | 1.2 | 1 | 3 | 2 | 20 | 1.0 | 20 | 2.0 |
| Structure-regulating agent | | | | | | | | | | | | |
| Tetramethylethylene diamine (mol) | 0.17 | 0.38 | 0.16 | 0.03 | 0.06 | 0.00 | 0.03 | 0.16 | 0.16 | 0.08 | 0.16 | 0.30 |
| At initiation of polymerization | | | | | | | | | | | | |
| Styrene (kg) | 8.0 | 8.1 | 8.5 | 9.3 | 3.8 | 0 | 0 | 5 | 0.0 | 8.6 | 7.7 | 15.0 |
| 1,3-Butadiene (kg) | 24.0 | 242 | 25.5 | 27.9 | 20.2 | 35 | 35 | 15 | 35.0 | 25.7 | 232 | 20.0 |
| 10 minutes after initiation of polymerization | | | | | | | | | | | | |
| Styrene (kg) | 4.0 | 4.0 | 4.3 | 4.7 | 20 | 0 | 0 | 2 | 0.0 | 4.3 | 3.9 | 35.6 |
| 1,3-Butadiene (kg) | 84.0 | 84.8 | 89.1 | 97.5 | 118.9 | 48 | 77 | 101 | 76.2 | 53.3 | 81.1 | 620 |
| 2nd stage polymerization (polymer block B) | | | | | | | | | | | | |
| At initiation of 2nd stage polymerization | | | | | | | | | | | | |
| Styrene (kg) | 28.5 | 25.4 | 21.0 | 10.1 | 4.7 | 67 | 38 | 26 | 36.5 | 54.6 | 22.2 | 16.9 |
| 1,3-Butadiene (kg) | 1.5 | 3.5 | 1.6 | 0.5 | 0.4 | 0 | 0 | 0 | 23 | 3.4 | 11.9 | 0.5 |
| Resin modifying composition | A | B | C | D | E | F | G | H | I | J | - | L |

Table 2

| Amounts of ingredients added | Examples | | |
|---|---|---|---|
| | 6 | 7 | 8 |
| First stage polymerization (polymer block B) | | | |
|    Polymerization initiator | | | |
|       n-BuLi (mol) | 0.4 | 0.8 | 1.3 |
|    Structure-regulating agents | | | |
|       Tetramethylene diamine (mol) | 0.03 | 0.04 | 0.23 |
|    At initiation of polymerization | | | |
|       Styrene (kg) | 6.4 | 11.0 | 18.4 |
|       1,3-Butadiene (kg) | 0.5 | 1.2 | 2.0 |
| Second stage polymerization (polymer block A) | | | |
|    Polymerization initiator | | | |
|       n-BuLi (mol) | 2.1 | 3.1 | 8.3 |
|    At initiation of 2nd stage polymerization | | | |
|       Styrene (kg) | 4.3 | 4.1 | 2.8 |
|       1,3-Butadiene (kg) | 138.8 | 133.8 | 128.9 |
| Coupling reaction | | | |
|       Tetramethoxysilane (mol) | 0.83 | 0.98 | 2.38 |
| Resin modifying composition | M | N | O |

Table 3

| Example and Comp. Ex. | Resin modifying composition and amount (parts) | | Styrone (parts) | Acrylonitrile (parts) | Ethylbenzene (parts) | Organic peroxide (parts) | t-Dodecyl mercaptan (parts) |
|---|---|---|---|---|---|---|---|
| Example 1 | A | 13.4 | 62.2 | 20.7 | 3.45 | 0.05 | 0.2 |
| Example 2 | B | 13.0 | 62.5 | 20.8 | 3.45 | 0.05 | 0.2 |
| Example 3 | C | 12.6 | 62.8 | 20.9 | 3.45 | 0.05 | 0.2 |
| Example 4 | D | 11.6 | 63.8 | 21.2 | 3.35 | 0.05 | 0.2 |
| Example 5 | E | 10.2 | 64.6 | 21.5 | 3.45 | 0.05 | 0.2 |
| Example 6 | M | 10.5 | 64.4 | 21.5 | 3.35 | 0.05 | 0.2 |
| Example 7 | N | 10.8 | 64.2 | 21.4 | 3.35 | 0.05 | 0.2 |
| Example 8 | O | 11.3 | 63.8 | 21.3 | 3.35 | 0.05 | 0.2 |
| Com.Ex.1 | F | 17.9 | 58.8 | 19.8 | 3.45 | 0.05 | 0.2 |
| Com.Ex.2 | Q | 13.1 | 62.4 | 20.8 | 3.45 | 0.05 | 0.2 |
| Com.Ex.3 | H | 12.8 | 62.8 | 20.9 | 3.45 | 0.05 | 0.2 |
| Cam.Ex.4 | I | 12.9 | 62.8 | 20.9 | 3.35 | 0.05 | 0.2 |
| Com.Ex.5 | J | 18.1 | 58.7 | 19.8 | 3.35 | 0.05 | 0.2 |
| Com.Ex.6 | - | - | - | - | - | - | - |
| Com.Ex.7 | L | 12.8 | 62.8 | 20.9 | 3.45 | 0.05 | 0.2 |

Table 4

| | | Examples | | | | | Comparative Examples | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Resin modifying composition | | | | | | | | | | | | | |
| Glass transition temperature | | | | | | | | | | | | | |
| Polymer block (A) | (°C) | -80 | -78 | -80 | -80 | -83 | -90 | -90 | -81 | -90 | -73 | -80 | -38 |
| Polymer block (B) | (°C) | 91 | 76 | 85 | 90 | 88 | 104 | 103 | 104 | 89 | 88 | 28 | 94 |
| Moro-structure | | | | | | | | | | | | | |
| Styrene units content | (wt.%) | 27.0 | 25.0 | 22.5 | 16.0 | 7.0 | 44.5 | 25.1 | 22.5 | 24.3 | 45.0 | 22.5 | 45.0 |
| Butadiene units content | (wt%) | 73.0 | 75.0 | 77.5 | 84.0 | 93.0 | 55.5 | 74.9 | 77.5 | 75.7 | 55.0 | 77.5 | 55.0 |
| 1.2-Vinyl bond content | | | | | | | | | | | | | |
| in polybutadiene | (wt.%) | 14.0 | 28.5 | 17.1 | 10.6 | 12.2 | 10.0 | 13.0 | 17.0 | 16.8 | 14.0 | 17.0 | 17.1 |
| Coupling ratio | (%) | 0 | 0 | 0 | 0 | 0 | 0 | 0 | 0 | 0 | 0 | 0 | 0 |
| Weight average molecular weight | ($\times 10^4$) | 7.5 | 17.0 | 13.0 | 20.5 | 22.0 | 20.3 | 8.8 | 13.0 | 13.2 | 24.0 | 13.0 | 13.0 |
| Mooney viscosity (100°C) | | 25 | 40 | 32 | 35 | 34 | 155 | 30 | 55 | 51 | 91 | 17 | 34 |
| Viscosity of 5 wt% solution in styrene | | | | | | | | | | | | | |
| | (mPa.s) | 5 | 17 | 11 | 18 | 27 | 10 | 7 | 11 | 12 | 23 | 11 | 11 |
| Coagulability | | B | A | B | B | B | A | B | A | B | A | C | B |
| After warm air drying | | | | | | | | | | | | | |
| Residual volatile content | (wt%) | 1.30 | 0.80 | 0.85 | 0.85 | 1.25 | 4.42 | 5.77 | 3.20 | 3.15 | 3.50 | - | 5.41 |
| Gel content rating | | 1 | 1 | 1 | 1 | 1 | 1 | 1 | 1 | 1 | 1 | - | 1 |
| After re-drying | | | | | | | | | | | | | |
| Residual volatile content | (wt%) | - | - | - | - | - | 1.50 | 1.10 | 0.98 | 0.87 | 1.01 | - | 1.12 |
| Gel content rating | | - | - | - | - | - | 3 | 4 | 4 | 3 | 2 | - | 2 |
| Kind of resin modifying composition | | A | B | C | D | E | F | G | H | I | J | - | K |
| Modified resin composition | | | | | | | | | | | | | |
| Charpy impact strength (notched 23°C) | | | | | | | | | | | | | |
| | (kJ/m$^2$) | 16 | 20 | 19 | 20 | 23 | 16 | 18 | 19 | 20 | 17 | - | 16 |
| Melt mass flow rate | (g/10 min) | 60 | 32 | 42 | 30 | 17 | 38 | 43 | 38 | 33 | 18 | - | 35 |
| Modified resin article. fish eyes *1 | | N | N | N | N | N | F | F | F | F | F | - | F |
| Note, fish eyes N: not found, F: found | | | | | | | | | | | | | |

EP 2 042 531 B1

Table 5

| | | Examples | | |
|---|---|---|---|---|
| | | 6 | 7 | 8 |
| Resin modifying composition | | | | |
| Glass transition temperature | | | | |
| Polymer block (A) | (°C) | -83 | -83 | -83 |
| Polymer block (B) | (°C) | 88 | 80 | 80 |
| Micro-stricture | | | | |
| Styrene units content | (wt%) | 7.0 | 10.1 | 14.0 |
| Butadiene units content | (wt.%) | 93.0 | 89.9 | 86.0 |
| 1,2-Vinyl bond content | | | | |
| in polybutadiene | (wt.%) | 17.8 | 13.3 | 22.0 |
| Coupling ratio | (%) | 86 | 87 | 90 |
| Weight average molecular weight ($\times 10^4$) | | 21.4 | 20.1 | 7.8 |
| Mooney viscosity (100°C) | | 44 | 42 | 34 |
| Yscoeity of 5 wt% solution in styrene | | | | |
| | (mPa.s) | 28 | 16 | 5 |
| Coagulability | | A | A | A |
| After warm air drying | | | | |
| Residual volatile content | (wt%) | 0.51 | 0.55 | 0.81 |
| Gel content rating | | 1 | 1 | 1 |
| After re-drying | | | | |
| Residual volatile content | (wt.%) | - | - | - |
| Gel content rating | | - | - | - |
| Kind of resin modifying composition | | M | N | O |
| Modified resin composition | | | | |
| Charpy impact strength (notched 23°C) | | | | |
| | (kJ/m$^2$) | 18 | 20 | 19 |
| Melt mass flow rate | (g/10 min) | 60 | 32 | 42 |
| Modified resin article, fish eyes *1 | | N | N | N |
| Note, fish eyes N: not found, F: found | | | | |

As seen from Tables 4 and 5, the resin modifying compositions comprising the block copolymer according to the present invention and a heat stabilizer, set forth in Examples 1-8, exhibited a high Charpy impact strength and improved impact resistance. The melt mass flow rate was also good and thus the processability and film-forming property were satisfactory. The occurrence of fish eyes was not found.

In contrast, the resin modifying compositions comprising a block copolymer which does not satisfy at least one of the glass transition temperature of polymer block (A) or polymer block (B), the styrene units content, and the 5 weight % styrene solution viscosity as stipulated according to the present invention, set forth in Comparative Examples 1-7, gave shaped articles having a large number of fish eyes. It is presumed that this disadvantage of fish eyes is due to the fact that the resin modifying compositions contain a large amount of gel in the dried state with a residual volatile content of not larger than 1.5% by weight.

Industrial Applicability

A resin modifying composition comprising the block copolymer of the present invention gives a modified resin composition having good impact resistance, and good processability and shapability, which gives a shaped article having no or minimized fish eyes.

In view of the above-mentioned beneficial properties, a modified resin composition comprising the block copolymer of the present invention can be widely used, and especially suitable for uses for which excellent impact resistance is required. For example, the modified resin composition can be used for household appliances such as domestic electric washing machines, air conditioners, household refrigerators, AV appliances and OA appliances; toys, cosmetic containers, sheets and other haberdasheries; structural materials for automobile interiors and exteriors and household materials; telephones; mobile phones; and instruments.

**Claims**

1. A block copolymer comprised of a polymer block or blocks (A) comprising conjugated diene monomer units and a polymer block or blocks (B) comprising conjugated diene monomer units and aromatic vinyl monomer units, wherein the block copolymer satisfies the following requirements (1) through (5):

   (1) the polymer block or blocks (A) have a glass transition temperature in the range of -85°C to -40°C;
   (2) the polymer block or blocks (B) have a glass transition temperature in the range of 30°C to 95°C;
   (3) the content of aromatic vinyl monomer units in the block copolymer is at least 0.5% by weight but lower than 30% by weight, based on the totals weight of the block copolymer;
   (4) the viscosity of a 5% by weight solution of the block copolymer in styrene is at least 0.1 mPa·s but smaller than 30 mPa·s; and
   (5) the content of vinyl bond in the portion of conjugated diene monomer units in the block copolymer is not larger than 40% by weight based on the total weight of the conjugated diene monomer units in the block copolymer.

2. The block copolymer according to claim 1, wherein the conjugated diene monomer units contained in the block copolymer are 1,3-butadiene units.

3. The block copolymer according to claim 1 or 2, wherein the content of conjugated diene monomer units in the block copolymer is in the range of 70 to 99.5% by weight based on the total weight of the block copolymer.

4. The block copolymer according to any one of claims 1 to 3, wherein the polymer block or blocks (A) further comprises aromatic vinyl monomer units, and the ratio in amount of the conjugated diene monomer units to the aromatic vinyl monomer units in the polymer block or blocks (A) is in the range of 100/0 to 15/85 by weight.

5. The block copolymer according to any one of claims 1 to 4, wherein the ratio in amount of the conjugated diene monomer units to the aromatic vinyl monomer units in the polymer block or blocks (B) is in the range of 1/99 to 50/50 by weight.

6. The block copolymer according to any one of claims 1 to 5, wherein the ratio of the polymer block or blocks (A) to the polymer block or blocks (B) is in the range of 0.43 to 49 by weight.

7. The block copolymer according to any one of claims 1 to 6, wherein the content of aromatic vinyl monomer units in the block copolymer is at least 3% by weight but lower than 30% by weight, based on the total weight of the block copolymer.

8. A composition for modifying a resin, which comprises the block copolymer as claimed in any one of claims 1 to 7.

9. The composition for modifying a resin according to claim 8, which further comprises 0.01 to 0.5 part by weight of a heat stabilizer based on 100 parts by weight of the block copolymer.

10. A modified resin composition comprising the composition for modifying a resin as claimed in claim 8 or 9, and a base resin.

11. The modified resin composition according to claim 10, wherein the base resin is a resin comprising aromatic vinyl monomer units.

12. The modified resin composition according to claim 10 or 11, wherein the ratio in amount of the composition for modifying a resin to the base resin is such that the ratio of the block copolymer in the composition for modifying a resin to the base resin is in the range of 2/98 to 50/50 by weight.

13. The modified resin composition according to any one of claims 10 to 12, which is prepared by polymerizing a monomer as raw material for forming the base resin in the presence of the composition for modifying a resin.

14. The modified resin composition according to any one of claims 10 to 13, which has a melt mass flow rate in the range of 5 to 80 as measured at 220°C under a load of 10 kg.

**Patentansprüche**

1. Blockcopolymer, bestehend aus einem Polymerblock oder -blöcken (A), umfassend konjugierte Dienmonomereinheiten und einen Polymerblock oder -blöcke (B), umfassend konjugierte Dienmonomereinheiten und aromatische Vinylmonomereinheiten, wobei das Blockcopolymer den folgenden Bedingungen 1 bis 5 genügt:

(1) der Polymerblock oder die -blöcke (A) besitzen eine Glasübergangstemperatur in dem Bereich von -85°C bis -40°C;
(2) der Polymerblock oder die -blöcke (B) besitzen eine Glasübergangstemperatur in dem Bereich von 30°C bis 95°C;
(3) der Gehalt an aromatischen Vinylmonomereinheiten in dem Blockcopolymer ist mindestens 0,5 Gew.-%, jedoch geringer als 30 Gew.-%, basierend auf dem Gesamtgewicht des Blockcopolymers;
(4) die Viskosität einer 5 Gew.-%-Lösung des Blockcopolymers in Styrol ist mindestens 0,1 mPa·s, jedoch geringer als 30 mPa·s; und
(5) der Gehalt an Vinylbindungen im Anteil konjugierter Dienmonomereinheiten im Blockcopolymer ist nicht größer als 40 Ges.-%, basierend auf dem Gesamtgewicht der konjugierten Dienmonomereinheiten in dem Blockcopolymer.

2. Blockcopolymer gemäß Anspruch 1, wobei die in dem Blockcopolymer enthaltenen konjugierten Dienmonomereinheiten 1,3-Butadieneinheiten sind.

3. Blockcopolymer gemäß Anspruch 1 oder 2, wobei der Gehalt an konjugierten Dienmonomereinheiten im Blockcopolymer in dem Bereich von 70 bis 99,5 Gew.-% liegt, basierend auf dem Gesamtgewicht des Blockcopolymers.

4. Blockcopolymer gemäß einem beliebigen der Ansprüche 1 bis 3, wobei der Polymerblock oder die -blöcke (A) des weiteren aromatische Vinylmonomereinheiten umfassen, und das Mengenverhältnis der konjugierten Dienmonomereinheiten zu den aromatischen Vinylmonomereinheiten im Polymerblock oder den -blöcken (A) ist in dem Bereich von 100/0 bis 15/85 nach Gewicht.

5. Blockcopolymer gemäß einem beliebigen der Ansprüche 1 bis 4, wobei das Mengenverhältnis der konjugierten Dienmonomereinheiten zu den aromatischen Vinylmonomereinheiten im Polymerblock oder in den -blöcken (B) in dem Bereich von 1/99 bis 50/50 nach Gewicht ist.

6. Blockcopolymer gemäß einem beliebigen der Ansprüche 1 bis 5, wobei das Verhältnis des Polymerblocks oder der -blöcke (A) zum Polymerblock oder den -blöcken (B) in dem Bereich von 0,43 bis 49 nach Gewicht ist.

7. Blockcopolymer gemäß einem beliebigen der Ansprüche 1 bis 6, wobei der Gehalt an aromatischen Vinylmonomereinheiten in dem Blockcopolymer mindestens 3 Gew.-% beträgt, jedoch geringer als 30 Gew.-%, basierend auf dem Gesamtgewicht des Blockcopoylmers.

8. Zusammensetzung zur Modifizierung eines Harzes, welche das Blockcopolymer, wie in einem beliebigen der Ansprüche 1 bis 7 beansprucht, umfasst.

9. Zusammensetzung zur Modifizierung eines Harzes gemäß Anspruch 8, welche des weiteren 0,01 bis 0,5 Gewichtsteile eines Hitzestabilisators umfasst, basierend auf 100 Gewichtsteilen des Blockcopolymers.

10. Modifizierte Harzzusammensetzung, umfassend die Zusammensetzung zum Modifizieren eines Harzes, wie in Anspruch 8 oder 9 beansprucht, und ein Basisharz.

11. Modifizierte Harzzusammensetzung gemäß Anspruch 10, wobei das Basisharz ein Harz ist, das aromatische Vinylmonomereinheiten umfasst.

**12.** Modifizierte Harzzusammensetzung gemäß Anspruch 10 oder 11, wobei das Mengenverhältnis der Zusammensetzung zur Modifizierung eines Harzes zum Basisharz dergestalt ist, dass das Verhältnis des Blockcopolymers in der Zusammensetzung zum Modifizieren eines Harzes zum Basisharz in dem Bereich von 2/98 bis 50/50 nach Gewicht ist.

**13.** Modifizierte Harzzusammensetzung gemäß einem beliebigen der Ansprüche 10 bis 12, welche durch Polymerisieren eines Monomers als Rohmaterial zur Bildung des Basisharzes in Gegenwart der Zusammensetzung zur Modifizierung eines Harzes hergestellt wird.

**14.** Modifizierte Harzzusammensetzung gemäß einem beliebigen der Ansprüche 10 bis 13, welche eine Schmelzmassenflussrate in dem Bereich von 5 bis 80 besitzt, gemessen bei 220°C unter einer Last von 10 kg.

**Revendications**

**1.** Copolymère à blocs constitué d'un bloc polymère ou des blocs polymère (A) comprenant des motifs de monomère diène conjugué et d'un bloc polymère ou des blocs polymère (B) comprenant des motifs de monomère diène conjugué et des motifs de monomère vinyle aromatique,
le copolymère à blocs satisfaisant les conditions suivantes (1) à (5):

(1) le bloc polymère ou les blocs polymère (A) a/ont une température de transition vitreuse comprise dans la gamme de -85°C à -40°C;
(2) le bloc polymère ou les blocs polymère (B) a/ont une température de transition vitreuse comprise dans la gamme de 30°C à 95°C;
(3) la teneur en motifs de monomère vinyle aromatique dans le copolymère à blocs est au moins 0,5% en poids, mais inférieure à 30% en poids, sur la base du poids total du copolymère à blocs;
(4) la viscosité en solution, mesurée en solution à 5% en poids du copolymère à blocs dans le styrène, est au moins 0,1m Pa·s, mais inférieure à 30m Pa·s, et
(5) la teneur en liaisons vinyle dans la portion des motifs de monomère diène conjugué dans le copolymère à blocs ne dépasse pas 40% en poids, sur la base du poids total des motifs de monomère diène conjugué dans le copolymère à blocs.

**2.** Copolymère à blocs selon la revendication 1, dans lequel les motifs de monomère diène conjugué contenus dans le copolymère à blocs sont des motifs de butadiène -1,3.

**3.** Copolymère à blocs selon la revendication 1 ou 2, dans lequel la teneur en motifs de monomère diène conjugué dans le copolymère à blocs est comprise dans la gamme de 70 à 99,5% en poids, sur la base du poids total du copolymère à blocs.

**4.** Copolymère à blocs selon l'une quelconque des revendications 1 à 3, dans lequel le bloc polymère ou les blocs polymère (A) comprend/comprennent en outre des motifs de monomère vinyle aromatique, et le rapport pondéral des motifs de monomère diène conjugué aux motifs de monomère vinyle aromatique dans le bloc polymère ou les blocs polymère (A) est compris dans la gamme de 100/0 à 15/85 en poids.

**5.** Copolymère à blocs selon l'une quelconque des revendications 1 à 4, dans lequel le rapport pondéral des motifs de monomère diène conjugué aux motifs de monomère vinyle aromatique dans le bloc polymère ou les blocs polymère (B) est compris dans la gamme de 1/99 à 50/50 en poids.

**6.** Copolymère à blocs selon l'une quelconque des revendications 1 à 5, dans lequel le rapport pondéral du bloc polymère ou des blocs polymère (A) au bloc polymère ou aux blocs polymère (B) est compris dans la gamme de 0,43 à 49.

**7.** Copolymère à blocs selon l'une quelconque des revendications 1 à 6, dans lequel la teneur en motifs de monomère vinyle aromatique dans le copolymère à blocs est au moins 3% en poids, mais inférieure à 30% en poids, sur la base du poids total du copolymère à blocs.

**8.** Composition pour la modification d'une résine comprenant le copolymère à blocs selon l'une quelconque des revendications 1 à 7.

9. Composition pour la modification d'une résine selon la revendication 8, qui comprend en outre de 0,01 à 0,5 partie en poids d'un stabilisant thermique pour 100 parties en poids de copolymère à blocs.

10. Composition de résine modifiée comprenant la composition pour la modification d'une résine selon la revendication 8 ou 9 et une résine de base.

11. Composition de résine modifiée selon la revendication 10, dans laquelle la résine de base est une résine qui comprend des motifs de monomère vinyle aromatique.

12. Composition de résine modifiée selon la revendication 10 ou 11, dans laquelle le rapport pondéral de la composition pour la modification d'une résine à la résine de base est tel que le rapport pondéral du copolymère à blocs dans la composition pour la modification d'une résine à la résine de base est compris dans la gamme de 2/98 à 50/50.

13. Composition de résine modifiée selon l'une quelconque des revendications 10 à 12, qui est préparée par polymérisation d'un monomère en tant que matériau de départ pour former la résine de base en présence de la composition pour la modification d'une résine.

14. Composition de résine modifiée selon l'une quelconque des revendications 10 à 13, qui a un indice de fluidité en masse compris dans la gamme de 5 à 80, mesuré à 220°C sous une charge de 10 kg.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6348317 A
- JP H1172413 A
- JP H5331349 A